# EUROPEAN PATENT APPLICATION

(11) **EP 4 414 834 A1**
(43) Date of publication of application: **14.08.2024**
(21) Application number: 23859097.0
(22) Date of filing: 09.08.2023
(51) Int. Cl.: G06F 9/451

(54) **CROSS-DEVICE CARD INTERACTION METHOD AND ELECTRONIC DEVICE**

(30) Priority: 31.08.2022 CN 202211059255
(71) Applicant: Huawei Technologies Co., Ltd., Shenzhen, Guangdong 518129 (CN)
(72) Inventor: JIANG, Wensai, Shenzhen, Guangdong 518129 (CN)
(74) Representative: Thun, Clemens
(86) International application number: PCT/CN2023/111893
(87) International publication number: WO 2024/046062

(57) **Abstract**

A cross-device card interaction method and an electronic device are provided. The method includes: A first electronic device displays preview information of at least one card of a second electronic device. The preview information of the at least one card includes preview information of a first card. The first card belongs to a first application on the second electronic device. The first electronic device receives a first operation for the preview information of the first card. In response to the first operation, the first electronic device sends, to the second electronic device, a first request for adding the first card. The first electronic device obtains card information that corresponds to the first card and that is sent by the second electronic device. The first electronic device adds the first card based on the card information corresponding to the first card. In this way, element-level cross-device interaction can be implemented between the first electronic device and the second electronic device.

## Description

### CROSS-REFERENCE TO RELATED APPLICATIONS

This application claims priority to Chinese Patent Application No. 202211059255.6, filed with the China National Intellectual Property Administration on August 31, 2022, and entitled "CROSS-DEVICE CARD INTERACTION METHOD AND ELECTRONIC DEVICE", which is incorporated herein by reference in its entirety.

### TECHNICAL FIELD

This application relates to the field of electronic technologies, and in particular, to a cross-device card interaction method and an electronic device.

### BACKGROUND

As types and a quantity of smart devices increase, more users require more diversified and flexible inter-device interaction. Currently, the inter-device interaction has relatively high costs, and an interaction application needs to be customized for each device. This means a heavy workload and a strong limitation.

At present, an electronic device can implement only application-level cross-device interaction. However, cross-device interaction cannot be implemented for an intra-application element such as a widget, an application widget (Widget), or a card.

### SUMMARY

This application provides a cross-device card interaction method and an electronic device, to implement intra-application element-level cross-device interaction.

According to a first aspect, this application provides a cross-device card interaction method. The method includes: A first electronic device displays preview information of at least one card of a second electronic device. The preview information of the at least one card includes preview information of a first card. The first card belongs to a first application on the second electronic device. The first electronic device receives a first operation for the preview information of the first card. In response to the first operation, the first electronic device sends, to the second electronic device, a first request for adding the first card. The first electronic device obtains card information that corresponds to the first card and that is sent by the second electronic device. The first electronic device adds the first card based on the card information corresponding to the first card. In the method, element-level cross-device interaction can be implemented between the first electronic device and the second electronic device, and cross-device interaction can be implemented between the first electronic device and the second electronic device without installing a same application.

In a possible implementation, after the first electronic device obtains the card information that corresponds to the first card and that is sent by the second electronic device, the first electronic device may further display the card information corresponding to the first card, so that a user can view the card information corresponding to the first card.

In a possible implementation, the first electronic device may further receive a second operation for the first card. In response to the second operation, the first electronic device deletes the first card, and sends, to the second electronic device, a second request for deleting the first card. The first electronic device receives a deletion complete message from the second electronic device. The deletion complete message is used to notify the second electronic device that cached information related to the first card has been deleted. Therefore, cache space on the second electronic device may also be released after the first electronic device deletes the first card.

In a possible implementation, the first electronic device may further receive a third operation for the first card. In response to the third operation, the first electronic device sends, to the second electronic device, a third request for updating the first card. The first electronic device receives card information that is used to update the first card and that is sent by the second electronic device. The first electronic device updates the first card based on the card information used to update the first card. In this manner, the first card on the first electronic device can be synchronously updated after the first card on the second electronic device is updated.

In a possible implementation, before the first electronic device displays the preview information of the at least one card of the second electronic device, the method further includes: The first electronic device receives a fourth operation. In response to the fourth operation, the first electronic device sends, to the second electronic device, a fourth request for querying a card. The first electronic device receives the preview information of the at least one card from the second electronic device. In this manner, the preview information of the at least one card of the second electronic device may be synchronized to the first electronic device through query.

In a possible implementation, the first electronic device and the second electronic device are located in a same network, so that the first electronic device and the second electronic device can directly communicate with each other, thereby improving information transmission security.

In a possible implementation, the preview information of the first card is the same as card information displayed on the first card; or the preview information of the first card is different from card information displayed on the first card.

According to a second aspect, this application provides a cross-device card interaction method. The method includes: A first electronic device displays a card preview interface. The card preview interface includes card information of at least one card of a second electronic device. The card information of the at least one card includes card information of a first card. The first card belongs to a first application on the second electronic device. The first electronic device receives a fifth operation for the card information of the first card. In response to the fifth operation, the first electronic device adds the first card and displays the first card on a desktop. In the method, element-level cross-device interaction can be implemented between the first electronic device and the second electronic device, and cross-device interaction can be implemented between the first electronic device and the second electronic device without installing a same application.

According to a third aspect, this application provides a cross-device card interaction method. The method includes: A first electronic device displays a first card of a first application on a second electronic device. The first electronic device receives a first operation for the first card. In response to the first operation, the first electronic device sends a card addition request to the second electronic device. The first electronic device obtains card information that corresponds to the first card and that is sent by the second electronic device. The first electronic device displays the first card. In the method, the card of the second electronic device may be displayed on the first electronic device, to implement element-level cross-device interaction. In this way, cross-device interaction can be implemented without installing the first application on the first electronic device.

In a possible implementation, the first application is not installed on the first electronic device.

According to a fourth aspect, this application further provides an apparatus. The apparatus includes modules/units for performing the method in any possible design in any one of the foregoing aspects. These modules/units may be implemented by hardware, or may be implemented by hardware by executing corresponding software.

According to a fifth aspect, this application provides an electronic device, including a processor and a memory. The memory is configured to store one or more computer programs. When the one or more computer programs stored in the memory are executed by the processor, the electronic device is enabled to implement the method in any one of the foregoing aspects and possible designs of the aspects.

According to a sixth aspect, this application further provides a computer-readable storage medium. The computer-readable storage medium includes a computer program. When the computer program is run on a terminal, the terminal is enabled to perform the method in any one of the foregoing aspects and possible designs of the aspects.

According to a seventh aspect, this application further provides a computer program product. When the computer program product is run on a terminal, the terminal is enabled to perform the method in any one of the foregoing aspects and possible designs of the aspects.

### BRIEF DESCRIPTION OF DRAWINGS

FIG. 1 is a schematic diagram of application migration in the conventional technologies;
FIG. 2 is a schematic diagram of application migration in the conventional technologies;
FIG. 3 is a schematic diagram of application migration in the conventional technologies;
FIG. 4 is a schematic diagram of a cross-device card interaction system according to an embodiment of this application;
FIG. 5 is a schematic diagram of a hardware structure of an electronic device according to an embodiment of this application;
FIG. 6A and FIG. 6B are a schematic diagram of a scenario according to an embodiment of this application;
FIG. 7 is a schematic diagram of a cross-device card interaction system according to an embodiment of this application;
FIG. 8 is a schematic flowchart of a cross-device card interaction method according to an embodiment of this application;
FIG. 9 is a schematic flowchart of a cross-device card interaction method according to an embodiment of this application;
FIG. 10 is a schematic flowchart of obtaining card information according to an embodiment of this application;
FIG. 11 is a schematic flowchart of adding a card according to an embodiment of this application;
FIG. 12 is a schematic flowchart of deleting a card according to an embodiment of this application;
FIG. 13 is a schematic flowchart of updating a card according to an embodiment of this application; and
FIG. 14 is a schematic diagram of a hardware structure of an electronic device according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

Some terms in this application are first described, to help a person skilled in the art have a better understanding.

(1) A card may also be referred to as a widget or a widget, and may provide a service capability with a finer granularity than an application (application, APP). A service or content that a user concerns most about is directly displayed for the user in an interactive card form. The card may be used in various apps or interaction scenarios, to better meet user requirements. The card may be a quick application or at least one page (page) in a native app corresponding to a quick application. The user can tap the card to jump to the corresponding quick application or a specific service page in an app. In addition, the card may further implement a quick application or some functions of a native app corresponding to the quick application. For example, a music card may implement playback, jumping to a previous song, jumping to a next song, or jumping to an interface of a music application.

One card corresponds to some service functions of an application. A provider of an application may split a service of the application into a plurality of service modules. Each service module corresponds to one card. Then, different cards are pushed to the user in different service scenarios. Unless otherwise specified, the "application" in embodiments of this application may be a quick application, or may be a native app. This is not limited in embodiments of this application.

(2) In embodiments of this application, "at least one" means one or more, and "a plurality of" means two or more.

In addition, it should be understood that in descriptions of this application, terms such as "first" and "second" are merely used for distinguishing and description, but should not be understood as indicating or implying relative importance, or should not be understood as indicating or implying a sequence.

To better understand the technical solutions provided in embodiments of this application, the following first describes application scenarios of embodiments of this application.

With rapid development of smart devices, types and a quantity of smart devices in home, office, and learning scenarios increase, and more users require more diversified and flexible inter-device interaction. For example, in a home scenario, a user wants to control an application on a television by using a mobile phone or a tablet, and may migrate the application on the television to the mobile phone or the tablet, to control the application on the television by using the application migrated to the mobile phone or the tablet. Currently, there are the following several solutions for cross-device interaction between devices:

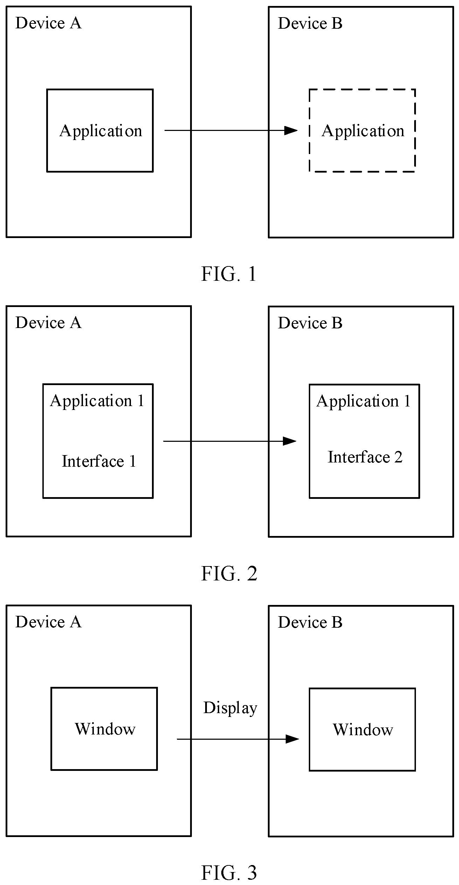

Solution 1: As shown in FIG. 1, after a connection is established between a device A and a device B, an application on the device A is transmitted to the device B in a local transmission manner or a cloud downloading manner, to implement cross-device application migration. In Solution 1, a transmission granularity is relatively large, and needs to be an application level, which affects efficiency.

Solution 2: As shown in FIG. 2, a same application 1 is installed on both a device A and a device B. After a connection is established between the device A and the device B, the application 1 on the device A transfers a service parameter to the application 1 on the device B. After receiving the parameter, the application 1 on the device B performs interface conversion, to implement a cross-device start function. This solution is not flexible enough. Both sides are required to have the same application. A scenario of this solution is strongly limited.

Solution 3: As shown in FIG. 3, after a connection is established between a device A and a device B, the device A takes a screenshot in real time, and then sends screenshot data to the device B. The device B directly displays a screenshot image transmitted by the device A. Picture mirroring display can be implemented provided that a transmission frequency is high enough. This solution can only be used for mirroring display. Two devices are simultaneously occupied, and real-time transmission of a large amount of information is required. This process is not stable enough.

The foregoing solutions can implement only cross-device interaction of an application, but cannot implement cross-device interaction of an element in an application such as a widget, an application widget (Widget), or a card.

To resolve the foregoing problem, an embodiment of this application provides a cross-device card interaction method. A first electronic device displays at least one piece of preview information of a second electronic device. Preview information of at least one card includes preview information of a first card. The first card belongs to a first application on the second electronic device. Then, the first electronic device receives a first operation for the preview information of the first card, and in response to the first operation, sends, to the second electronic device, a first request for adding the first card. Then, the first electronic device obtains card information that corresponds to the first card and that is sent by the second electronic device. The first electronic device adds the first card based on the card information corresponding to the first card. In the method, element-level cross-device interaction can be implemented between the first electronic device and the second electronic device without installing a same application on the first electronic device and the second electronic device.

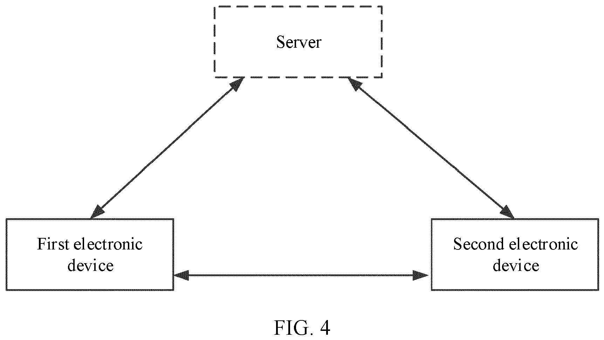

The technical solutions in embodiments of this application may be applied to a cross-device card interaction system. FIG. 4 may be a schematic diagram of a structure of a cross-device card interaction system according to an embodiment of this application. The cross-device card interaction system may include a plurality of electronic devices. Any two electronic devices may communicate with each other by using a distributed communication system. For example, FIG. 4 shows only a first electronic device and a second electronic device. The first electronic device and the second electronic device may communicate with each other, to obtain card information of each other.

In some other embodiments, the cross-device card interaction system may further include a server. As shown in FIG. 4, both the first electronic device and the second electronic device may separately communicate with the server, and the card information on the first electronic device and the second electronic device may be uploaded to the server. When the first electronic device needs to obtain the card information on the second electronic device, the first electronic device may obtain the card information on the second electronic device from the server.

It should be noted that, in this embodiment of this application, the cross-device card interaction system shown in FIG. 4 may further include more electronic devices such as a third electronic device and a fourth electronic device. A quantity of electronic devices is not limited in this embodiment of this application.

The electronic device in this embodiment of this application, for example, the first electronic device or the second electronic device in FIG. 4, may be any electronic device that supports a service card function. For example, the electronic device may be a portable electronic device including a function such as a personal digital assistant and/or a music player, for example, a mobile phone, a tablet computer, or a wearable device (for example, a smartwatch) having a wireless communication function. An example embodiment of the portable electronic device includes but is not limited to a portable electronic device using iOS^{®}, Android^{®}, Microsoft^{®}, or another operating system. Alternatively, the portable electronic device may be another portable electronic device, for example, a laptop (laptop) computer with a touch-sensitive surface (for example, a touch panel). It should be further understood that, in some other embodiments of this application, the electronic device may be alternatively a desktop computer with a touch-sensitive surface (for example, a touch panel) instead of a portable electronic device.

Generally, the electronic device supports a plurality of applications, for example, one or more of the following applications: a travel application, a drawing application, a demonstration application, a word processing application, a game application, a phone application, a video player application, a music player application, an email application, a shopping application, an instant messaging application, a photo management application, a camera application, a browser application, a calendar application, a clock application, a payment application, and a health management application. There may be a plurality of instant messaging applications, for example, an SMS application, an MMS application, various email applications, WeChat, Tencent chatting software (QQ), WhatsApp Messenger, Line (Line), Instagram (instagram), Kakao Talk, and DingTalk. A user can send information such as a text, a voice, an image, a video file, and another file to another contact by using the instant messaging application.

The foregoing applications supported by the electronic device may be native applications apps, or may be fast applications. This is not specifically limited in this embodiment of this application. The electronic device may support cards corresponding to these applications, for example, a card corresponding to an order logistics service of the shopping application, or a card corresponding to ticket information of the travel application. Further, in addition to a card corresponding to an installed application, the electronic device may also support a card corresponding to an uninstalled application.

The following uses an example in which the electronic device is a mobile phone, to describe a schematic diagram of a structure of an electronic device used in an embodiment of this application.

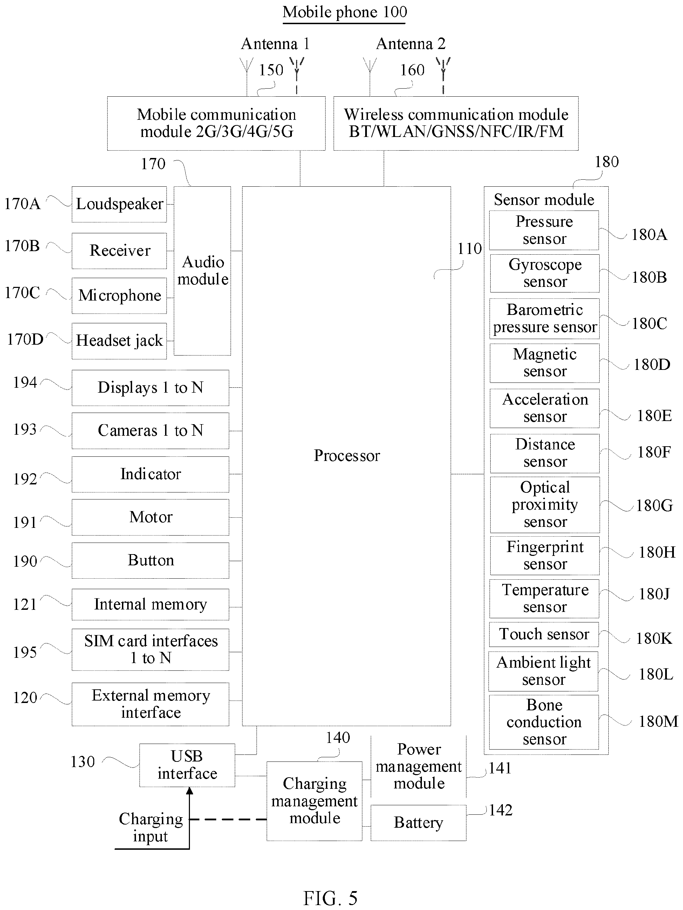

As shown in FIG. 5, the mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a loudspeaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The solutions provided in embodiments of this application may be implemented by the processor 110 through controlling or invoking another component. The controller may be a nerve center and a command center of the mobile phone 100. The controller may generate an operation control signal based on instruction operation code and a time sequence signal to complete control of instruction fetching and instruction execution.

The mobile phone 100 may implement a display function by using the GPU, the display 194, the application processor, and the like. The display 194 is configured to display an image, a video, and the like. For example, the display 194 displays a home screen, a lock screen, a leftmost screen, a user interface of a communication application provided by a system, a user interface of another third-party application, or the like on a screen of a terminal, and displays a service card in embodiments of this application on these display interfaces.

The GPU is a microprocessor for image processing and is connected to the display 194 and the application processor. The GPU is configured to: perform mathematical and geometric computation, and render an image. The processor 110 may include one or more GPUs that execute program instructions to generate or change display information. For example, the GPU performs graphics rendering based on card information, data, and the like, to generate a card that needs to be displayed.

The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the mobile phone 100 may include one or N displays 194, where N is a positive integer greater than 1.

A wireless communication function of the mobile phone 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the mobile phone 100 may be configured to cover one or more communication frequency bands. Different antennas may be multiplexed to improve antenna utilization. For example, the antenna 1 may be multiplexed as a diversity antenna in a wireless local area network. In some other embodiments, the antennas may be used in combination with a tuning switch.

The mobile communication module 150 may provide a wireless communication solution including 2G/3G/4G/5G that is applied to the mobile phone 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the loudspeaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution applied to the mobile phone 100, for example, a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation by using the antenna 2.

The charging management module 140 is configured to receive a charging input from the charger. The power management module 141 is configured to connect to the battery 142, the charging management module 140, and the processor 110. The power management module 141 receives an input from the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a state of battery health (electric leakage and impedance). In some other embodiments, the power management module 141 may be alternatively disposed in the processor 110. In some other embodiments, the power management module 141 and the charging management module 140 may be alternatively disposed in a same component.

The external memory interface 120 may be configured to connect to an external memory card, for example, a micro SD card, to extend a storage capability of the mobile phone 100. The external memory card communicates with the processor 110 through the external memory interface 120, to implement a data storage function. For example, files such as music and a video are stored in the external storage card.

The internal memory 121 may be configured to store computer-executable program code. The computer-executable program code includes instructions. The processor 110 runs the instructions stored in the internal memory 121, to perform various function applications of the mobile phone 100 and data processing. The internal memory 121 may include a program storage area and a data storage area. The program storage area may store an operating system, an application required by at least one function (for example, a sound play function and an image play function), and the like. The data storage area may store data (for example, audio data and a phone book), and the like created when the mobile phone 100 is used. In addition, the internal memory 121 may include a high-speed random access memory, and may further include a nonvolatile memory, for example, at least one magnetic disk storage device, a flash storage device, and a universal flash storage (universal flash storage, UFS).

The touch sensor 180K is also referred to as a "touch panel". The touch sensor 180K may be disposed on the display 194. The touch sensor 180K and the display 194 constitute a touchscreen, which is also referred to as a "touch control screen" or a "touch screen". The touch sensor 180K is configured to detect a touch operation performed on or near the touch sensor 180K. The touch sensor may transfer the detected touch operation to the application processor to determine a type of a touch event. A visual output related to the touch operation may be provided on the display 194. In some other embodiments, the touch sensor 180K may be alternatively disposed on a surface of the mobile phone 100 at a position different from that of the display 194.

It may be understood that the structure shown in this embodiment of this application constitutes no specific limitation on the mobile phone 100. In some other embodiments of this application, the mobile phone 100 may include more or fewer components than those shown in the figure, or combine some components, or split some components, or have different component arrangements. The components shown in the figure may be implemented by hardware, software, or a combination of software and hardware.

In a scenario to which a cross-device card interaction method provided in embodiments of this application is applicable, for example, there are a plurality of smart home devices in a home scenario, and a user wants to use a mobile terminal to operate a specific application on the smart home device. A service function of the application on the smart home device may be migrated to a mobile terminal. For example, card list information that can be provided by all applications on the smart home device may be displayed on the mobile terminal, and the card list information includes preview information of at least one card. When the mobile terminal receives a tap operation of tapping a specific piece of preview information in the card list information, in response to the tap operation, the mobile terminal obtains a list of cards with all specifications that can be provided by the applications that are on the smart home device and to which the preview information belongs, selects a card with one specification and adds the card to a desktop, and generates the card belonging to the smart home device on the desktop of the mobile terminal, so that the user operates the application on the smart home device by using the card migrated to the mobile terminal.

In some embodiments, the preview information of the card may be not actual card information, and may be understood as a default card template. For example, preview information of a weather card on a smart television is displayed on a mobile phone. Currently, the weather card on the smart television shows Shanghai, 28°C. The mobile phone displays a card template of the preview information of the weather card. The card template includes a default city name (for example, Beijing) and a default temperature (for example, 25°C). After the weather card on the smart television is updated, for example, content of the weather card is updated to Shanghai, 15°C, the preview information of the weather card displayed on the mobile phone is still Beijing, 25°C. If the preview information of the weather card is displayed on a laptop computer, the preview information is also the default card template: Beijing, 25°C. Certainly, the preview information of the weather card may be not a default place name or temperature, and may be represented by using a default text, a default icon, or a default image. A specific representation form of the preview information of the card is not limited in this application.

In some other embodiments, the preview information of the card may be alternatively actual card information. This is not limited herein. For example, when the mobile phone 100 accesses a card preview interface, the mobile phone 100 may obtain card information of an application on another electronic device, to display, on the card preview interface, actual card information corresponding to the application.

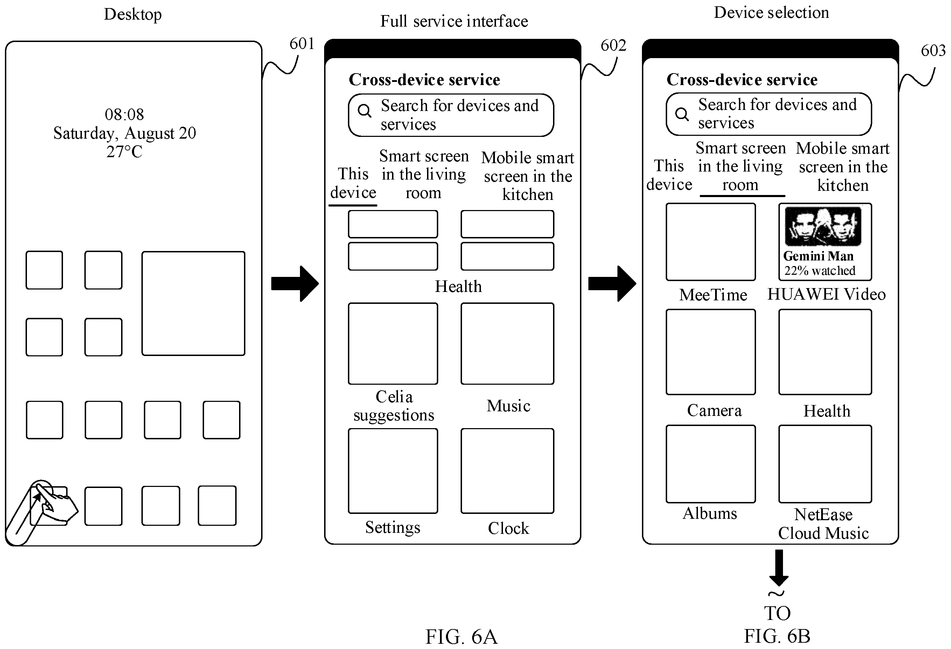

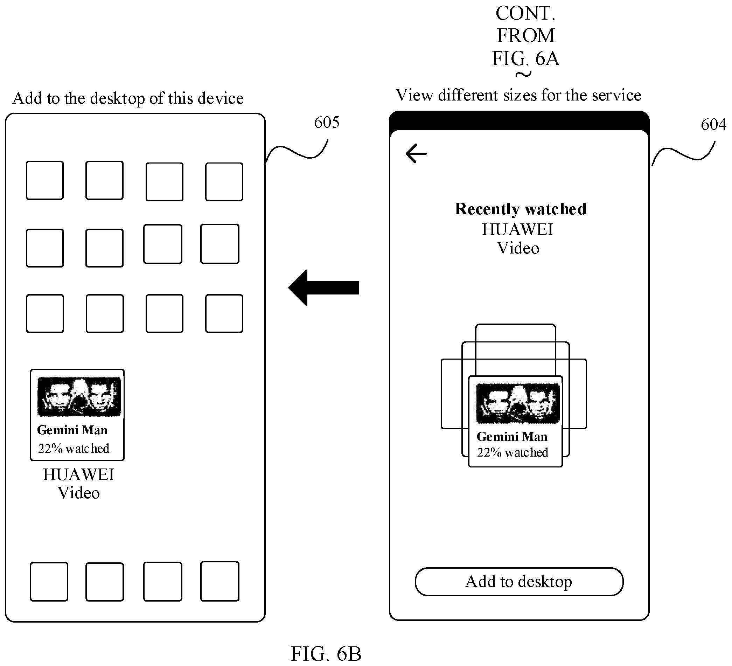

FIG. 6A and FIG. 6B show an example of a group of user interfaces. A mobile terminal displays a desktop interface 601. The desktop interface may include a plurality of applications and cards. When receiving an operation, for example, an operation of sliding inward from a lower left corner of a screen of an electronic device, the mobile terminal displays a full service interface 602 in response to the operation. A cross-device service is displayed on the full service interface 602. For example, the full service interface 602 includes preview information of cards of applications on the mobile terminal. The full service interface 602 may further include device information of a smart screen in the living room and a mobile smart screen in the kitchen. When the mobile terminal displays the full service interface 602 that includes the card information of the applications on the mobile terminal, the mobile terminal receives a rightward sliding operation, and switches to a user interface 603 in response to the sliding operation. The user interface 603 includes preview information of cards of applications on the smart screen in the living room.

In some other embodiments, if the mobile terminal further receives a rightward sliding operation, the mobile terminal switches to a user interface in which preview information of cards of applications on the mobile smart screen in the kitchen is displayed. For example, the user interface 603 includes preview information of a card of HUAWEI Video. When the mobile terminal receives a tap operation for the preview information of the card of HUAWEI Video, the mobile terminal displays a user interface 604. The user interface 604 includes a card list of cards of HUAWEI Video that can be provided by the smart screen in the living room. The cards of HUAWEI Video may have different specifications. The specification herein includes card customization information such as a card size, a card refresh time interval, a card name, and card description information. The user interface 604 may further include an "add to desktop" control. When receiving a tap operation for the "add to desktop" control, the mobile terminal generates a card of the HUAWEI Video application on the smart screen in the living room, and adds the card of the HUAWEI Video application to a desktop application. The mobile terminal displays a desktop interface 605, and the desktop interface 605 includes the card of the HUAWEI Video application.

In the foregoing scenario, before the mobile terminal displays card list information that can be provided by all the applications on the smart home device, the mobile terminal may first obtain the card list information that can be provided by all the applications on the smart home device. There are a plurality of specific manners of obtaining the card list information. The manners include but are not limited to the following possible implementations.

In a possible implementation 1, each smart home device may upload, to a cloud server, card list information that can be provided by all applications on the smart home device, and then the mobile terminal obtains, from the server, the card list information that can be provided by all the applications on each smart home device.

In a possible implementation 2, after discovering a smart home device in a same network as the mobile terminal, the mobile terminal may obtain card list information that can be provided by all applications on the smart home device in the same network. Herein, a same network identifier is connected in a same network environment. When information update needs to be performed for a card of the smart home device in the network, a corresponding card on the mobile device is synchronously updated. In the implementation 2, the mobile terminal can directly communicate with the smart home device in the same network, thereby implementing higher security.

In the foregoing scenario, the mobile terminal is an electronic device of a card user, and the smart home device is an electronic device of a card provider. The card user in embodiments of this application is an application that needs to display a card; and the card provider is an application that provides card display and service logic, and may or may not have a card display capability.

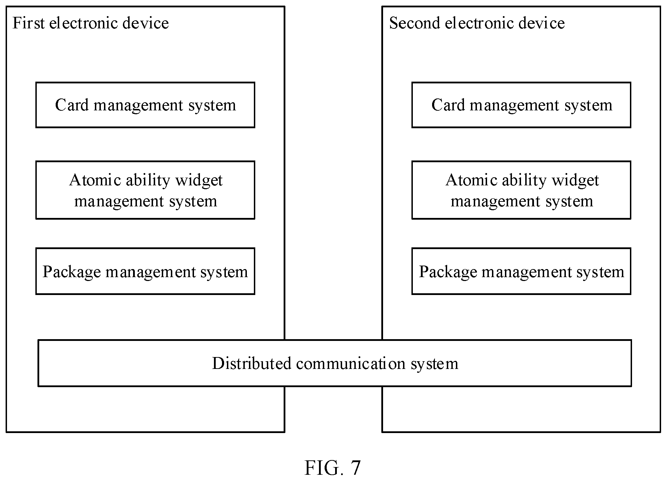

FIG. 7 is a schematic diagram of a system architecture of a cross-device card interaction system according to an embodiment of this application.

As shown in FIG. 7, the system architecture includes an electronic device of a card user and an electronic device of a card provider. The electronic device of the card user is, for example, the mobile terminal in the scenario shown in FIG. 6A and FIG. 6B. The electronic device of the card provider is, for example, the smart home device in the scenario shown in FIG. 6A and FIG. 6B.

As shown in FIG. 7, the electronic device of the card user and the electronic device of the card provider each may include a card management service, a package management system, an atomic ability widget management system, and a distributed communication system.

The card management service is used to manage functions such as adding, querying, updating, and deleting a card, and store cache information of a card.

The atomic ability widget management system is used to manage a start of an application carrying a card and a life cycle of the application.

The package management system is used to manage a card specification, application information, resource information, and the like.

The distributed communication system is used to establish a cross-device link and obtain data information of a cross-device card.

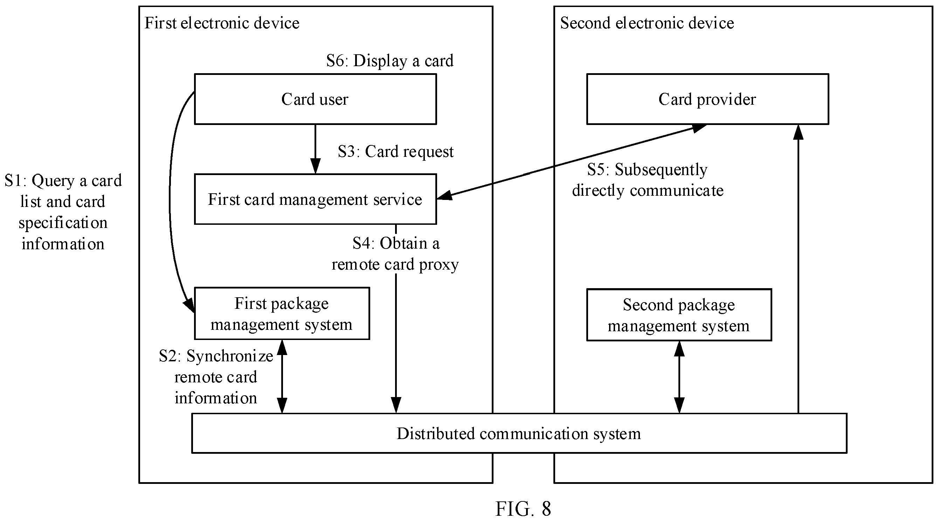

Based on the cross-device card interaction system shown in FIG. 7, FIG. 8 shows an example of a schematic flowchart of a cross-device card interaction method. For ease of differentiation, in FIG. 8, a card management service on an electronic device of a card user is referred to as a first card management service, a card management service on an electronic device of a card provider is referred to as a second card management service, a package management system in the electronic device of the card user is referred to as a first package management system, and a package management system in the electronic device of the card provider is referred to as a second package management system.

As shown in FIG. 8, a procedure of the cross-device card interaction method includes the following steps:
S1: The card user queries a card list and card specification information from the first package management system.
S2: The first package management system synchronizes a card list and card specification information of a card of a second electronic device by using a distributed communication system.

The card list includes preview information of at least one card. A specification of the card is, for example, a name of the card, a refresh frequency of the card, a resource of the card, or a size of the card. The size of the card is, for example, four grids or six grids, and a shape of the card is a square or a rectangle.

FIG. 8 shows only one second electronic device as an example. The first package management system synchronizes, by using the distributed communication system, the card list and the card specification information of all applications included in the second electronic device. In some other embodiments, when a plurality of second electronic devices and the first electronic device are in a same network, the first package management system synchronizes, by using the distributed communication system, card lists and card specification information of applications included in the plurality of second electronic devices.

S3: The card user sends a card addition request to the first card management service.

For example, the card provider is a video player application, and the card user is a desktop application. For example, the card addition request is used to request to add a remote control card of the video player application.

S4: The first card management service obtains a remote interface proxy of the card provider by using the distributed communication system.

S5: The first card management service directly communicates with the card provider subsequently by using the remote interface proxy, to perform a card addition operation.

For example, the card provider is a video player application, and the card user is a desktop application. For example, the card addition request in step S3 is used to request to add a remote control card of the video player application, and the card addition operation in step S5 may be implemented in the following manner: The first card management service obtains layout information and display data information of the remote control card by using the remote interface proxy. Then the first card management service returns the obtained layout information and display data information of the remote control card to the card user. The card user generates the remote control card through rendering based on the layout information and the display data information of the remote control card.

S6: After adding the card, the card user displays the card.

The remote control card is still used as an example. A user may operate the video player application of the card provider by using the remote control card added by the card user. The remote control card includes a pause/play button. For example, the video player application on the second electronic device is playing a video, and the user taps the pause/play button on the remote control card on the first electronic device, so that the video player application on the second electronic device pauses play of the video. When the user taps the pause/play button again, the video player application on the second electronic device can be enabled to continue playing the video.

After step S6, the first card management service may further perform a card deletion operation and a card update operation by using the remote interface proxy. For example, the card user adds the remote control card of the card provider. The deletion operation may be implemented in the following manner: When receiving an operation for deleting the remote control card, the card user deletes the remote control card of the card user, and sends a deletion message to the card provider by using the remote interface proxy. The deletion message may carry an identifier of the to-be-deleted remote control card. After receiving the deletion message, the card provider deletes the layout information and the display data information of the remote control card that are locally cached in the second electronic device to which the card provider belongs.

The following describes the cross-device card interaction method provided in embodiments of this application by using an example in which an electronic device of a card user is a first electronic device and an electronic device of a card provider is a remote electronic device.

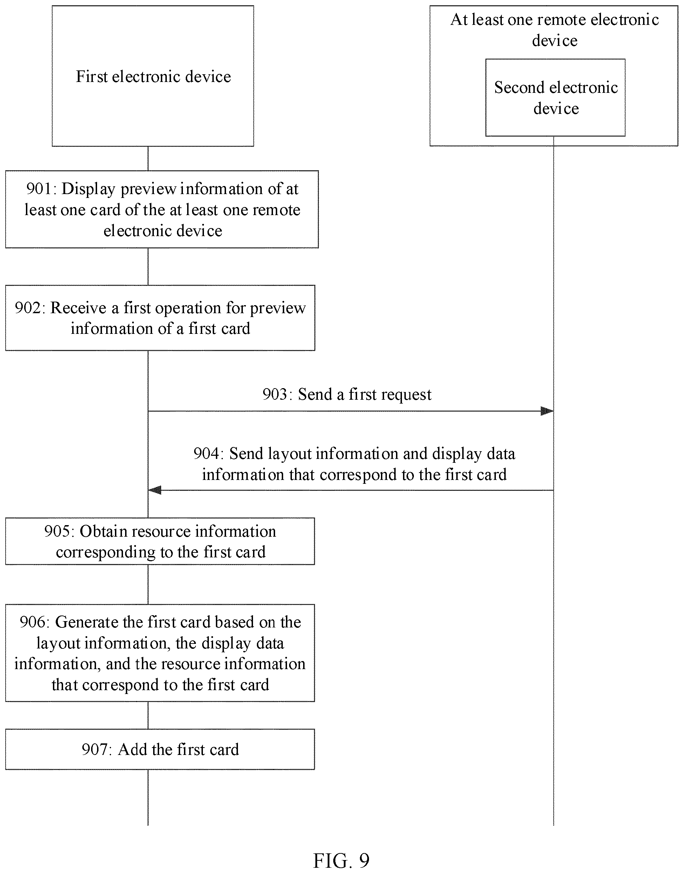

As shown in FIG. 9, the cross-device card interaction method includes the following steps:
Step 901: The first electronic device displays preview information of at least one card of at least one remote electronic device.

Before step 901, the first electronic device may communicate with the at least one remote electronic device by using a distributed communication system, and may obtain the preview information of the at least one card of the at least one remote electronic device; or may first obtain a remote interface proxy of each remote electronic device by using the distributed communication system, and then directly communicate with a corresponding remote electronic device by using the remote interface proxy of each remote electronic device, to obtain preview information of a card of the corresponding remote electronic device.

When there is one remote electronic device, the first electronic device may obtain preview information of at least one card of the remote electronic device. When there are a plurality of remote electronic devices, the first electronic device may obtain preview information of at least one card of the plurality of remote electronic devices.

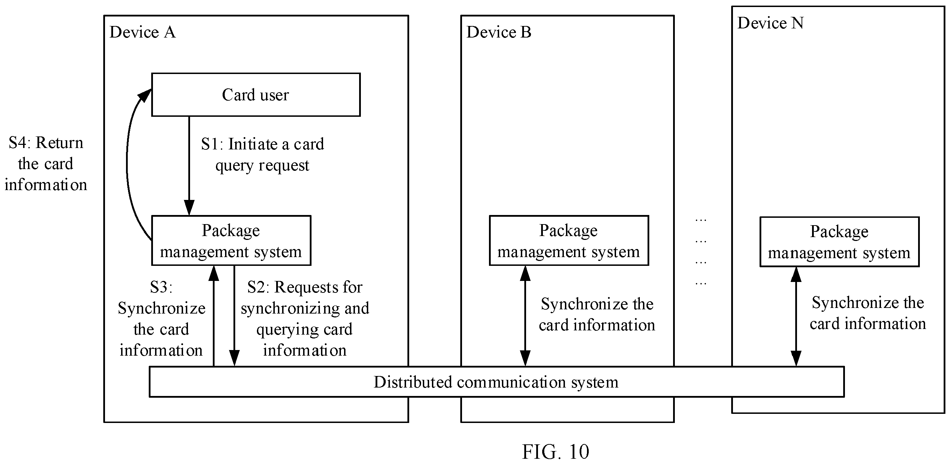

Before step 901, the first electronic device may first obtain the preview information of the at least one card of the at least one remote electronic device. The following uses an example in which the first electronic device is a device A, and the at least one remote electronic device includes a device B, a device C, ..., and a device N, to describe a process of obtaining the preview information of the at least one card of the at least one remote electronic device in step 901 with reference to a specific example. As shown in FIG. 10, the obtaining procedure includes the following steps:
S 1: The card user initiates a card query request to a package management system.

In some embodiments, the card query request may be triggered by a user operation. For example, the first electronic device triggers the card query request when receiving a tap operation on an application of the card user. For another example, a control that can trigger the card query request exists on a user interface of the first electronic device, and the card query request is triggered after a tap operation for the control is received. For another example, when connecting to a network, the first electronic device may trigger the card query request, and then the first electronic device may send the card query request to a second electronic device that is in the same network as the first electronic device.

The card query request is used to query card lists and card specification information of all devices in the network.

S2: The package management system initiates, to the distributed communication system, requests for synchronizing and querying the card lists and the card specification information of all the devices in the network.

S3: After synchronizing all the card lists and the card specification information, the distributed communication system transmits, to the device A that initiates the request, device information and card specification information of a card corresponding to the device information.

S4: The package management system transmits, to the card user, preview information of a card and card specification information that are returned by the distributed communication system.

In this example, an application on a single device can obtain preview information and card specification information of another device in the network for a subsequent specific card operation.

In this embodiment of this application, a card that needs to be added to the first electronic device is referred to as a first card, a remote electronic device to which the first card belongs is referred to as the second electronic device, the at least one remote electronic device in step 901 includes the second electronic device, the preview information of the at least one card includes preview information of the first card, and the first card belongs to a first application on the second electronic device.

Step 902: The first electronic device receives a first operation for the preview information of the first card.

The first operation may be a tap operation, or may be another operation that may trigger a request to the second electronic device to add the first card. A type of the first operation is not limited herein.

Step 903: The first electronic device sends a first request to the second electronic device in response to the first operation.

The first request is used to add the first card of the second electronic device to the first electronic device. For example, the first request carries an identifier of the application carrying the first card and an identifier of the first card. If the first card is repeatedly requested to be added, the first request may carry only the identifier of the first card.

Step 904: In response to the first request, the second electronic device sends, to the first electronic device, layout information and display data information that correspond to the first card.

For example, the layout information may include various layout identifiers, for example, identifiers such as a layout A, a layout B, and a layout C. For example, resource information corresponding to the layout A is a landscape image, and resource information corresponding to the layout B is a figure image.

The display data information may be, for example, a parameter related to card display.

Step 905: The first electronic device obtains resource information corresponding to the first card.

For example, the resource information may include but is not limited to an image resource, a layout resource, and the like. If the first electronic device locally has the resource information corresponding to the first card, the first electronic device directly locally obtains the resource information corresponding to the first card. If the first electronic device does not locally have the resource information corresponding to the first card, the first electronic device may obtain the resource information from the second electronic device by using the distributed communication system.

Step 906: The first electronic device generates the first card based on the layout information, the display data information, and the resource information that correspond to the first card.

Step 907: The first electronic device adds the first card.

In some other embodiments, the first electronic device may display card information on a preview interface, and then the first electronic device adds the first card after receiving card information for the first card. It should be understood that adding the first card may include displaying the first card.

In the foregoing embodiment, element-level cross-device interaction can be implemented between the first electronic device and the second electronic device without installing a same application on the first electronic device and the second electronic device.

In some other embodiments, the first electronic device may also display the first card of the first application on the second electronic device. The first electronic device receives the first operation for the first card. Then, the first electronic device sends a card addition request to the second electronic device in response to the first operation. The first electronic device obtains the card information that corresponds to the first card and that is sent by the second electronic device. The first electronic device displays the first card, to implement element-level cross-device interaction without installing the first application on the first electronic device.

After the first electronic device receives the first operation for the preview information of the first card in step 902, a card addition procedure may be implemented by using step 903 to step 907. Based on the foregoing cross-device card interaction system shown in FIG. 7, the following describes a card addition procedure in detail with reference to a specific example by using an example in which the first electronic device is a device A and the second electronic device is a device B.

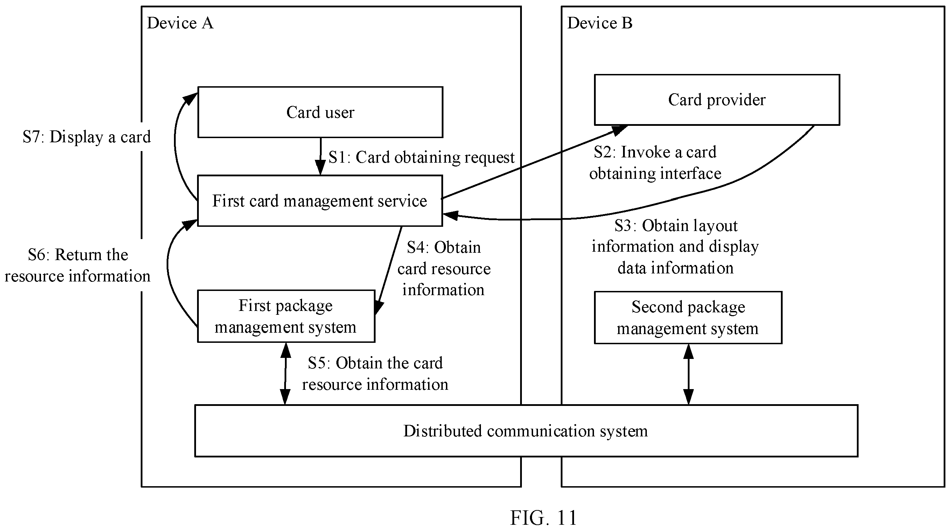

As shown in FIG. 11, the card addition procedure includes the following steps.

S1: A card user of the device A initiates a card obtaining request to a first card management service. The card obtaining request is used to request to add a card 1 of a card provider.

For example, the card user is a desktop application.

S2: After receiving the card obtaining request, the first card management service invokes a card obtaining interface provided by the card provider of the device B.

Before the first card management service invokes the card obtaining interface provided by the card provider of the device B, if the first card management service has obtained a remote interface proxy of the card provider by using the distributed communication system, the first card management service may directly communicate with the card provider by using the card obtaining interface in the card interface proxy. The remote interface proxy includes the card obtaining interface. If the first card management service has not obtained the remote interface proxy of the card provider, the first card management service may first obtain the remote interface proxy of the card provider by using the distributed communication system, and then directly communicate with the card provider by using the card interface proxy, that is, invoke the card obtaining interface.

S3: The card provider of the device B initializes layout information, display data information, and the like of the card 1 in the card obtaining interface based on service logic of the card provider of the device B, and then returns the layout information and the display data information to the first card management service of the device A.

S4: The first card management service of the device A queries, from the first package management system, card resource information that corresponds to the card 1 and that needs to be displayed.

The card resource information is, for example, an image resource or a layout resource.

S5: The first package management system obtains the card resource information.

In a possible implementation, the first package management system queries whether the resource information corresponding to the card 1 exists locally; and if the resource information corresponding to the card 1 exists locally, obtains the resource information corresponding to the card 1 from a local cache; or if the resource information corresponding to the card 1 does not exist locally, determines whether the resource information corresponding to the card 1 is less than or equal to 10M; and if the resource information corresponding to the card 1 is less than or equal to 10M, transmits and loads an application installation package by using a cloud, and obtains the resource information from the installation package; or if the resource information corresponding to the card 1 is greater than 10M, uses a local intra-network transmission method. In other words, the resource information corresponding to the card 1 in the application installation package is separately transmitted by using the distributed communication system, to reduce a size of transmitted data.

S6: The first package management system returns the obtained resource information of the card 1 to the first card management service.

S7: The first card management service of the device A creates a card instance that can be directly displayed, with reference to the layout information and the display data information that are returned by the card provider of the device B and the resource information returned by the first package management system of the device A; and then returns the card instance to the card user of the device A, so that the card user displays the card.

In the foregoing example, the card can be added and displayed across devices.

In some other embodiments, the first electronic device may further delete the added card. Deleting the first card in step 907 is used as an example. The first electronic device receives a second operation for the first card. The second operation is used to delete the first card. The first electronic device deletes the first card in response to the second operation, and sends a deletion message to the second electronic device. After receiving the deletion message, the second electronic device deletes the locally cached layout information and display data information.

Based on the foregoing cross-device card interaction system shown in FIG. 7, the following describes a card deletion procedure in detail with reference to a specific example by using an example in which the first electronic device is a device A and the second electronic device is a device B.

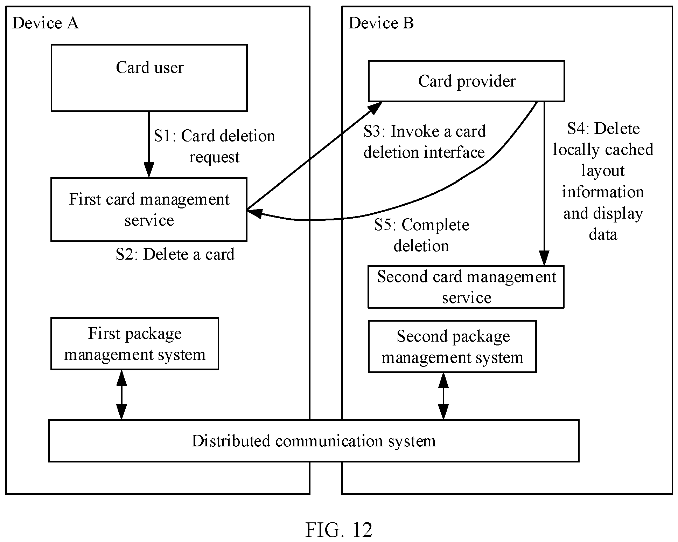

As shown in FIG. 12, the card deletion procedure includes the following steps.

S 1: A card user of the device A initiates a card deletion request to a first card management service. The card deletion request is used to request to delete a card 1.

S2: After receiving the card deletion request, the first card management service of the device A deletes the card 1.

S3: The first card management service invokes a card deletion interface provided by a card provider of the device B.

Before the first card management service invokes the card deletion interface provided by the card provider of the device B, if the first card management service has obtained a remote interface proxy of the card provider by using a distributed communication system, the first card management service may directly communicate with the card provider by using the card interface proxy. The remote interface proxy includes the card deletion interface. If the first card management service has not obtained the remote interface proxy of the card provider, the first card management service may first obtain the remote interface proxy of the card provider by using the distributed communication system, and then directly communicate with the card provider by using the card interface proxy, that is, invoke the card deletion interface.

S4: The card provider of the device B instructs a second card management service to delete layout information and display data information of the card 1.

After the first electronic device sends, to the second electronic device, a first request for adding the first card, the second electronic device sends the layout information and the display data information of the card 1 to the first electronic device, and locally caches the layout information and the display data information of the card 1. After deleting the card 1, the first electronic device sends a deletion message to the second electronic device. After receiving the deletion message, the second electronic device deletes the layout information and the display data information of the card 1, to release cache space.

S5: The card provider of the device B returns a deletion complete message to the first card management service of the device A by using the card deletion interface.

In some other embodiments, after step 907, the card added by the first electronic device is updated on the second electronic device, and the first electronic device may actively update the added card. For example, the first electronic device periodically updates the added card.

Updating the first card is used as an example. The first electronic device receives a third operation for the first card. The third operation is used to update the first card of the first electronic device. The first electronic device sends a third request to the second electronic device in response to the third operation. The third request is used to request to update the first card. For example, the third request carries an identifier of an application carrying the first card and an identifier of the first card.

Based on the foregoing cross-device card interaction system shown in FIG. 7, the following describes a card update procedure in detail with reference to a specific example by using an example in which the first electronic device is a device A and the second electronic device is a device B.

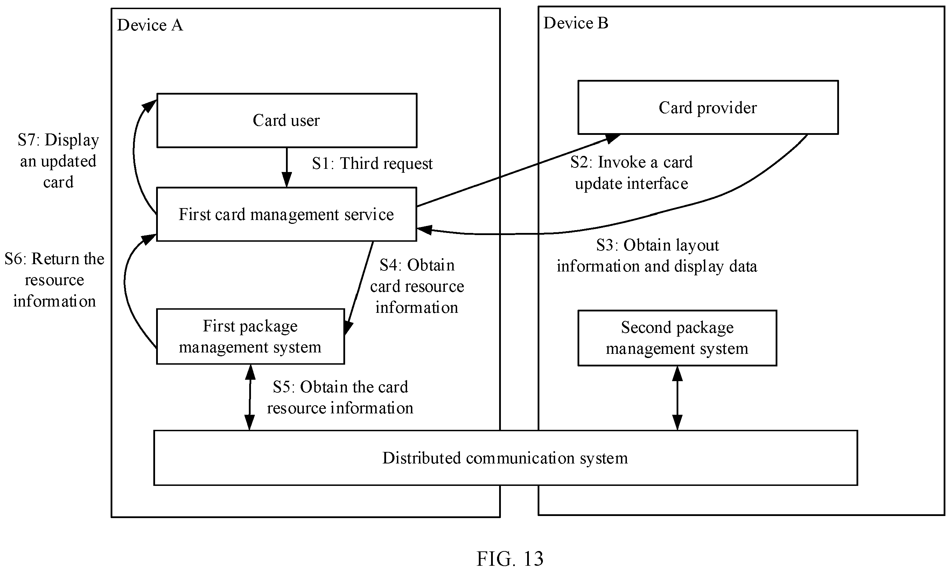

As shown in FIG. 13, the card update procedure includes the following steps.

S1: A card user of the device A initiates a third request to a first card management service. The third request is used to request to update a card 1 of a card provider.

S2: After receiving and obtaining the third request, the first card management service invokes a card update interface provided by the card provider of the device B.

Before the first card management service invokes a card deletion interface provided by the card provider of the device B, if the first card management service has obtained a remote interface proxy of the card provider by using a distributed communication system, the first card management service may directly communicate with the card provider by using the card interface proxy. The remote interface proxy includes the card update interface. If the first card management service has not obtained the remote interface proxy of the card provider, the first card management service may first obtain the remote interface proxy of the card provider by using the distributed communication system, and then directly communicate with the card provider by using the card interface proxy, that is, invoke the card update interface.

S3: The card provider of the device B initializes layout information, display data information, and the like of the card 1 in the card update interface based on service logic of the card provider of the device B, and then returns the layout information and the display data information to the first card management service of the device A.

S4: The first card management service of the device A queries, from the first package management system, updated card resource information that corresponds to the card 1 and that needs to be displayed.

S5: The first package management system obtains the updated card resource information.

In a possible implementation, the first package management system queries whether the updated card resource information corresponding to the card 1 exists locally; and if the updated resource information corresponding to the card 1 exists locally, obtains the updated resource information corresponding to the card 1 from a local cache; or if the updated resource information corresponding to the card 1 does not exist locally, determines whether the updated resource information corresponding to the card 1 is less than or equal to 10M; and if the updated resource information corresponding to the card 1 is less than or equal to 10M, transmits and loads an application installation package by using a cloud, and obtains the updated resource information from the installation package; or if the resource information corresponding to the card 1 is greater than 10M, uses a local intra-network transmission method. In other words, the updated resource information corresponding to the card 1 in the application installation package is separately transmitted by using the distributed communication system, to reduce a size of transmitted data.

S6: The first package management system returns the updated resource information of the card 1 to the first card management service.

S7: The first card management service of the device A creates a card instance that can be directly displayed, with reference to the layout information and the display data information that are returned by the card provider of the device B and the updated resource information returned by the first package management system of the device A; and then returns the card instance to the card user of the device A, so that the card user displays an updated card 1.

In the foregoing embodiments provided in this application, the method provided in embodiments of this application is described from a perspective of a terminal serving as an execution entity. To implement functions in the method provided in the foregoing embodiments of this application, the terminal may include a hardware structure and/or a software module, to implement the functions in a form of the hardware structure, the software module, or a combination of the hardware structure and the software module. Whether a specific function in the foregoing functions is performed by the hardware structure, the software module, or the combination of the hardware structure and the software module depends on particular application and design constraint conditions of the technical solutions.

Based on the foregoing embodiments and a same concept, an embodiment of this application further provides a terminal, configured to perform the steps performed by the terminal in the foregoing method embodiments. For related features, refer to the foregoing method embodiments. Details are not described herein again.

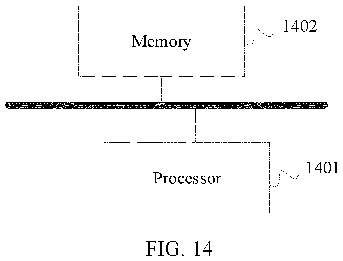

With reference to FIG. 14, an electronic device includes one or more processors 1401 and a memory 1402. The memory 1402 stores program instructions. When the program instructions are executed by the device, the method steps in embodiments of this application may be implemented.

The processor 1401 may be alternatively a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. It may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by a combination of hardware and software modules in the decoding processor. The software module may be located in a mature storage medium in the art, for example, a random access memory (random access memory, RAM), a flash memory, a read-only memory (read-only memory, ROM), a programmable read-only memory, an electrically erasable programmable memory, or a register. The storage medium is located in the memory, and the processor reads instructions in the memory and completes the steps in the foregoing methods in combination with hardware of the processor.

For related features of specific implementations of the apparatus, refer to the foregoing method part. Details are not described herein again.

Based on a same technical concept, an embodiment of this application further provides a chip. The chip is coupled to a memory in a device, so that the chip when being run invokes program instructions stored in the memory, to implement the foregoing method in embodiments of this application.

Based on a same technical concept, an embodiment of this application further provides a computer storage medium. The computer readable storage medium includes a computer program. When the computer program is run on an electronic device, the electronic device is enabled to perform the foregoing service widget display method in embodiments of this application.

Based on a same technical concept, an embodiment of this application further provides a computer program product. The computer program product includes instructions. When the instructions are executed, a computer is enabled to perform the foregoing method in embodiments of this application.

The foregoing embodiments in this application may be used separately, or may be used in combination, to achieve different technical effects.

As described above, the foregoing embodiments are merely used to describe the technical solutions of this application in detail. However, descriptions in the foregoing embodiments are merely used to help understand the methods in embodiments of this application, and should not be construed as a limitation on embodiments of this application. Any variation or replacement readily figured out by a person skilled in the art shall fall within the protection scope of embodiments of this application.

According to the context, the term "when" used in the foregoing embodiments may be interpreted as a meaning of "if', "after", "in response to determining", or "in response to detecting". Similarly, according to the context, the phrase "when it is determined that" or "if (a stated condition or event) is detected" may be interpreted as a meaning of "if it is determined that" or "in response to determining" or "when (a stated condition or event) is detected" or "in response to detecting (a stated condition or event)".

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device integrating one or more usable media, for example, a server or a data center. The usable medium may be a magnetic medium (for example, a floppy disk, a hard disk, or a magnetic tape), an optical medium (for example, a DVD), a semiconductor medium (for example, a solid-state disk), or the like.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the foregoing described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between apparatuses or units may be implemented in electrical, mechanical, or other forms.

The units described as separate parts may or may not be physically separate, and parts displayed as units may or may not be physical units, and may be at one location, or may be distributed on a plurality of network elements. Some or all of the units may be selected according to actual requirements to achieve the objectives of the technical solutions of this application.

The foregoing descriptions are merely specific implementations of this application. Any variation or replacement readily figured out by a person skilled in the art based on the specific implementations provided in this application shall fall within the protection scope of this application.

## Claims

1. A cross-device card interaction method, wherein the method comprises:
displaying, by the first electronic device, preview information of at least one card of a second electronic device, wherein the preview information of the at least one card comprises preview information of a first card, and the first card belongs to a first application on the second electronic device;
receiving, by the first electronic device, a first operation for the preview information of the first card;
in response to the first operation, sending, by the first electronic device to the second electronic device, a first request for adding the first card;
obtaining, by the first electronic device, card information that corresponds to the first card and that is sent by the second electronic device; and
adding, by the first electronic device, the first card based on the card information corresponding to the first card.

2. The method according to claim 1, wherein after the obtaining, by the first electronic device, card information that corresponds to the first card and that is sent by the second electronic device, the method further comprises:
displaying, by the first electronic device, the card information corresponding to the first card.

3. The method according to claim 1 or 2, wherein the method further comprises:
receiving, by the first electronic device, a second operation for the first card;
in response to the second operation, deleting, by the first electronic device, the first card, and sending, to the second electronic device, a second request for deleting the first card; and
receiving, by the first electronic device, a deletion complete message from the second electronic device.

4. The method according to any one of claims 1 to 3, wherein the method further comprises:
receiving, by the first electronic device, a third operation for the first card;
in response to the third operation, sending, by the first electronic device to the second electronic device, a third request for updating the first card;
receiving, by the first electronic device, card information that is used to update the first card and that is sent by the second electronic device; and
updating, by the first electronic device, the first card based on the card information used to update the first card.

5. The method according to any one of claims 1 to 4, wherein before the displaying, by the first electronic device, preview information of at least one card of a second electronic device, the method further comprises:
receiving, by the first electronic device, a fourth operation;
in response to the fourth operation, sending, by the first electronic device to the second electronic device, a fourth request for querying a card; and
receiving, by the first electronic device, the preview information of the at least one card from the second electronic device.

6. The method according to any one of claims 1 to 5, wherein the first electronic device and the second electronic device are located in a same network.

7. The method according to any one of claims 1 to 6, wherein the preview information of the first card is the same as card information displayed on the first card, or the preview information of the first card is different from card information displayed on the first card.

8. A cross-device card interaction method, wherein the method comprises:
displaying, by the first electronic device, a card preview interface, wherein the card preview interface comprises preview information of at least one card of a second electronic device, the preview information of the at least one card comprises preview information of a first card, and the first card belongs to a first application on the second electronic device;
receiving, by the first electronic device, an addition operation for the preview information of the first card; and
displaying, by the first electronic device, the first card on a desktop in response to the addition operation.

9. An electronic device, comprising a processor and a memory, wherein
the memory stores one or more computer programs, wherein
when the one or more computer programs stored in the memory are executed by the processor, the electronic device is enabled to perform the method according to any one of claims 1 to 7 or the method according to claim 8.

10. A computer-readable storage medium, wherein the computer-readable storage medium stores a computer program, and when the computer program is run on a terminal, the electronic device is enabled to perform the method according to any one of claims 1 to 7 or the method according to claim 8.

11. A computer program product, wherein the computer program product comprises a computer program or instructions, and when the computer program or the instructions are executed by a terminal, the method according to any one of claims 1 to 7 is implemented, or the method according to claim 8 is performed.
